# Europäisches Patentamt
## European Patent Office
## Office européen des brevets

(19)

(11) Publication number: **0 162 814**

**A1**

(12)

# EUROPEAN PATENT APPLICATION

(21) Application number: **85830075.9**

(22) Date of filing: **27.03.85**

(51) Int. Cl.⁴: **F 03 B 13/00**
**F 02 C 6/16**

(30) Priority: **29.03.84 IT 8600184**

(43) Date of publication of application:
**27.11.85 Bulletin 85/48**

(84) Designated Contracting States:
**AT BE CH DE FR GB LI LU NL SE**

(71) Applicant: **Brugnoli, Vincenzo**
**36 Via Treviso**
**I-01100 Viterbo(IT)**

(71) Applicant: **Miranda, Carlo**
**Via R.R. Pereira 189**
**I-00136 Roma(IT)**

(71) Applicant: **Palumbo, Claudio**
**Via Monte delle Gioie 13**
**I-00199 Roma(IT)**

(72) Inventor: **Brugnoli, Vincenzo**
**Via Treviso 36**
**I-01100 Viterbo(IT)**

(74) Representative: **Bazzichelli, Alfredo et al,**
**c/o Società Italiana Brevetti Piazza Poli 42**
**I-00187 Roma(IT)**

(54) **A plant for transforming the hydraulic energy of a differential of hydrostatic level of a water stream into a form of utilizable energy.**

(57) A plant comprising a hydrostatic pressure air compressor and a pneumatic utilizing machine, includes a closed loop for the air compressed by the compressor and expanded in the utilizing machine in which the air at the outlet of the utilizing machine is under a pressure lower than the atmospheric pressure.

FIG. 2

EP 0 162 814 A1

Brugnoli, Vincenzo

Miranda, Carlo

Palumbo, Claudio

## A plant for transforming the hydraulic energy of a differential of hydrostatic level of a water stream into a form of utilizable energy.

## SPECIFICATION

## Background of the invention

### 1. Field of the invention

The present invention relates to a plant for transforming the energy of hydraulic fall in water streams into a different form of energy that may be used for a practical purpose, such as mechanical energy or the lift of water to a level higher than that of the water stream.

### 2. Description of the prior art

Hydrostatic pressure air compressors are well known in the art, these being devices comprising a tubular body extending from the level of a sheet of water down to the interior of a bell placed near the bottom of a well in communication with deep water, so that the air in the bell is at the pressure of the water in depth.

In conventional plants where a hydrostatic pressure air compressor is used, the liquid of the water stream discharges itself into said tubular body through its inlet aperture that is provided with a throttling section created by an air diffuser that sucks air at the atmospheric pressure, that is mixed with the water and is entrained towards the interior of said bell, where the air is compressed up to the pressure created by the water head in said well.

The compressed air, separated from water is collected at the top of said bell wherefrom it may be collected through a suitable manifold for its utilization, for instance for powering a pneumatic machine or for lifting water by means of a conventional emulsion generation unit, i.e. an air injection pump.

The above mentioned devices are devices without moving mechanical parts and they are suitable for the exploitation of the hydraulic energy provided by moderate level differences in water streams.

The installation and operation costs of these devices is very low and the plants designed in this way are capable of providing low-cost energy from a natural source having a cost practically of zero.

However these devices of the known art have a very low energy transformation efficiency. Generally this is not an inconvenience, since the primary energy source has a practically zero cost. It would be however very desirable that the overall energy efficiency be increased.

The applicant has already obtained improvements in the hydraulic efficiency of devices of the kind of hydrostatic-pressure air compressor and air injection pump, as described in published italian patent applications no. 86001-A/80 and 86003-A/80.

## Summary of the invention

The aim of the present invention is to increase the overall efficiency of the plants of the above mentioned kind, suitable to exploit small water-stream falls.

According to the invention, a plant for the transformation of hydraulic energy of a hydrostatic level differential of a water stream, into a different form of energy, comprises an hydrostatic pressure air compressor having an inlet for air to be compressed up to a first pressure higher than atmospheric pressure by exploiting the energy of the hydrostatic level differential, in order to obtain a volume of compressed air; a utilizing pneumatic machine having an inlet and an outlet for air, the inlet being connected with said air volume of the compressor, said machine delivering useful energy by exploiting the expansion of said air from said first pressure up to a second pressure lower than the atmospheric pressure in correspo ndence with its outlet; and a conduit connecting the outlet of the machine with the air inlet of said compressor, so that said air circulates in a closed loop through said compressor, said machine and said conduit.

The utilizing pneumatic machine may be, for instance a compressed-air turbine, arranged for delivering mechanical energy, or an air injection pump known also as emulsion generation unit, that allows to lift a quantity of water to a height greater than that of the water stream, in order to constitute a water reserve at a utilizable piezometric height.

Brief Description of the Drawings

The present invention will be better disclosed hereinafter with reference to preferred embodiments, referred to as a non limitative example, with reference to the attached drawings, wherein:

figure 1 is a partially sectional schematical view of a plant according to the prior art where several kinds of utilization are shown;

figure 2 is a view similar to figure 1 of a plant according to the present invention for powering a pneumatic machine;

figure 3 is a view similar to those of the preceding figures of a plant according to the present invention for lifting water; and

figure 4 is a detailed view, partially sectioned, of the bulb of the diffuser located in the air compressor.

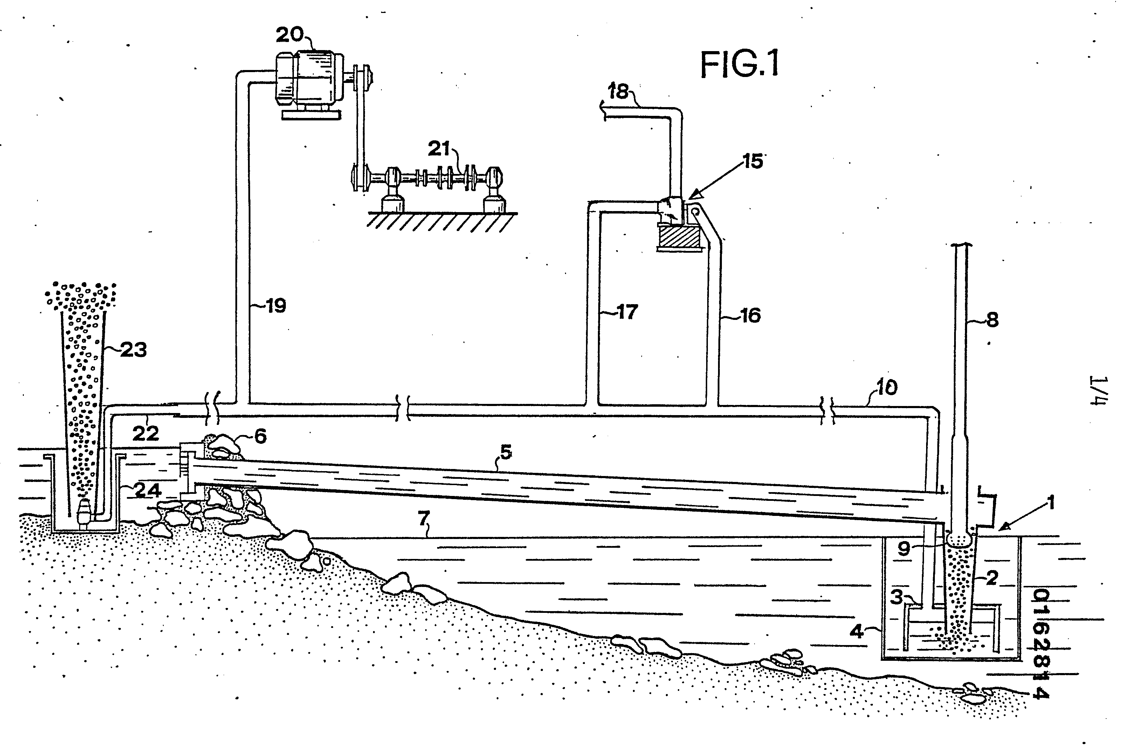

Description of the Preferred Embodiments With reference to figure 1, there is indicated with 1 a hydrostatic pressure compressor comprising a verti cal tubular body 2 the lower terminal end of which is sealingly inserted at the interior of a bell 3 located in proximity of the bottom of a well 4. As it will be remarked in figure 1 the compressor 1 is of the kind disclosed and claimed in another patent of the same applicant (published italian application no. 86001-A/80) wherein the tubular body 2 has a continuously decreasing horizontal sectional area from the top towards the bottom, for accomodating the sub sequent reductions of the volume of the air while it is being compressed in the drag towards the bottom of the well 4 and for imparting a constant speed to the descending mixture of air and water.

The inlet aperture of the tubular body 2 is connected in fluid communication with the bottom end of a conduit 5 that extends with a certain slope starting from the level of a dam 6 arranged for providing a small waterfall in the water stream 7, the upper end of the conduit 5 being in communication with the water upstream of the dam 6.

Through said bottom end of the conduit 5 a diffuser 8 is placed coaxially with the tubular body 2 of the hydrostatic compressor 1, the upper end of which communicates with the atmosphere, while the lower end extends into the inlet aperture of the tubular body 2, ending in a part enlarged as a bulb 9 provided with a plurality of holes and arranged for throttling the inlet aperture of the tubular body 2 in the manner that will be explained hereinafter.

During the operation, the water upstream of the dam 6 enters into the conduit 5 through said upper end and thanks to its slope runs downstream up to discharge into the inlet aperture of the tubular body 2 of the hydrostatic compressor 1. Because of the throttling action by the bulb 9 of the diffuser 8, there is crea ted, by Venturi effect, a negative pressure in the inlet aperture of the tubular body 2 that sucks exter nal air through the diffuser 8 and the bulb 9 provided with a plurality of holes. There will be formed conse quently a mixture or emulsion of water and air in which this latter, in the downward entrainment along the tu bular body 2, will be progressively compressed down to the depth of the bell 3 in the well 4. The final value of the pressure will be defined by the hydrosta tic head difference between the level of water in the bell 3 and the level of the waterstream 7 downstream with respect to the dam 6.

In the bell 3 the air/water mixture separates itself in compressed air and water and while the first one rises and stagnates in the volume of the bell 3, the second one overflows from the well 4 into the water stream 7.

The compressed air collected in the bell 3 may be utilized through a manifold 10, one end of which is connected in fluid-tight fluid communication with the top of the bell 3.

In figure 1 there are shown a few examples of utilization of the compressed air built up by means of the hydrostatic compressor, examples that will be briefly discussed without going too much into detail.

In a first example in the plant a pneumatic compressor unit is arranged, generally shown in 15 comprising a powering turbine and a compression turbine.

The compressed air from the manifold 10 through the branching 16 in supplied to the motor turbine of the unit 15 powering it. Said motor turbine operates in its turn the compression turbine associated thereto that through the branching 17 sucks air under a relatively moderated pressure from the manifold 10 and delivers high pressure air through the delivery tube 18 for any conceivable use.

In another example the compressed air is sent from the manifold 10 through the branching 19 to the pneumatic motor 20 the output of which through a system comprising pulleys and transmission belts delivers power to a utilizing apparatus schematically shown and generally shown in 21.

In the third example, finally, the compressed air out

- 8 -

0162814

coming from the manifold 10 through the injector 22 in the interior of the base of the injector pump or emulsion generating unit 23, where water exists at the same level of that in the well 24 in which it is par tially immersed, forms a mixture of water and small air bubbles having a specific gravity lower than that of water, for which reason said mixture rises along the emulsion generating unit 23 up to an height such that the pressure at the base of this latter produced by the column of said mixture at the interior of it equates the pressure of the hydrostatic head in the well 24 above said base of the emulsion generating unit 23. At the outlet port of the emulsion generating unit 23 said mixture separates itself again into water and air and while the first one overflows, the second one is dispersed in the atmosphere. The above described example is referred consequently to the use of the plant for the lifting of water.

As it may be appreciated from figure 1, the rising co lumn of the emulsion generating unit 23 is of the kind flared upwards for the same reasons previously detail ed with reference to the tubular body 2 of the hydrostatic compressor 1 and it constitutes the subject of another patent of the same applicant (published italian application no. 86003-A/80).

An inconvenience common to the multi-faceted use of the plant in question according to the prior art consists in that the air compressed by the hydrostatic compressor 1 after having delivered its own pneumatic

- 9 -

0162814

energy to the utilizing machine, discharges to the exterior under a pressure substantially corresponding to the atmospheric pressure, for which reason the uti lizing machine is determined by the pressure differen ce between the one produced by the hydrostatic compre ssor and the atmospheric one.

As it has been said previously the aim of the present invention is to increase the efficiency of the plant in question under the same operating conditions of a similar conventional apparatus and this aim is reached as it is shown in the two embodiment examples of figu res 2 and 3, wherein the components previously descri bed are shown with the same reference numerals given to them in figure 1 without any further detailed explanation.

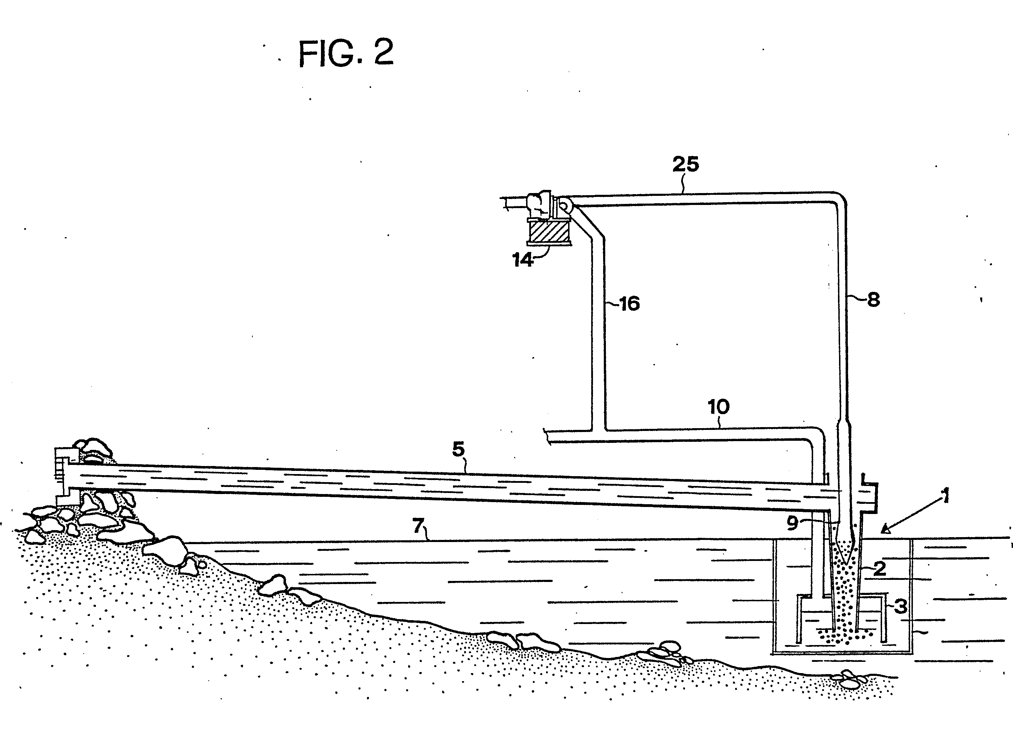

Considering now at first figure 2, it can be noted that the utilizing machine 14 fed, as described with reference to figure 1, by the compressed air taken from the bell 3 of the hydrostatic compressor by means of the manifold 10 and the branching 16, has the dischar ge or outlet connected to the diffuser 8 by means of the conduit 25, in order to create a substantially closed loop constituted of the hydrostatic compressor 1 - manifold 10 - branching 16 - utilizing machine 14 - connection conduit 25 - diffuser 8 - hydrostatic com pressor. Said loop allows to apply in register with the outlet of the utilizing machine 14 a pressure lo wer than the atmospheric pressure, thanks to the suct ion action of the hydrostatic compressor 1.

It derives, from the above, that the utilizing machine 14 can exploit a greater pressure differential than the one that can be obtained with the conventional plants of the same kind with a consequent greater efficiency of the plant according to the invention.

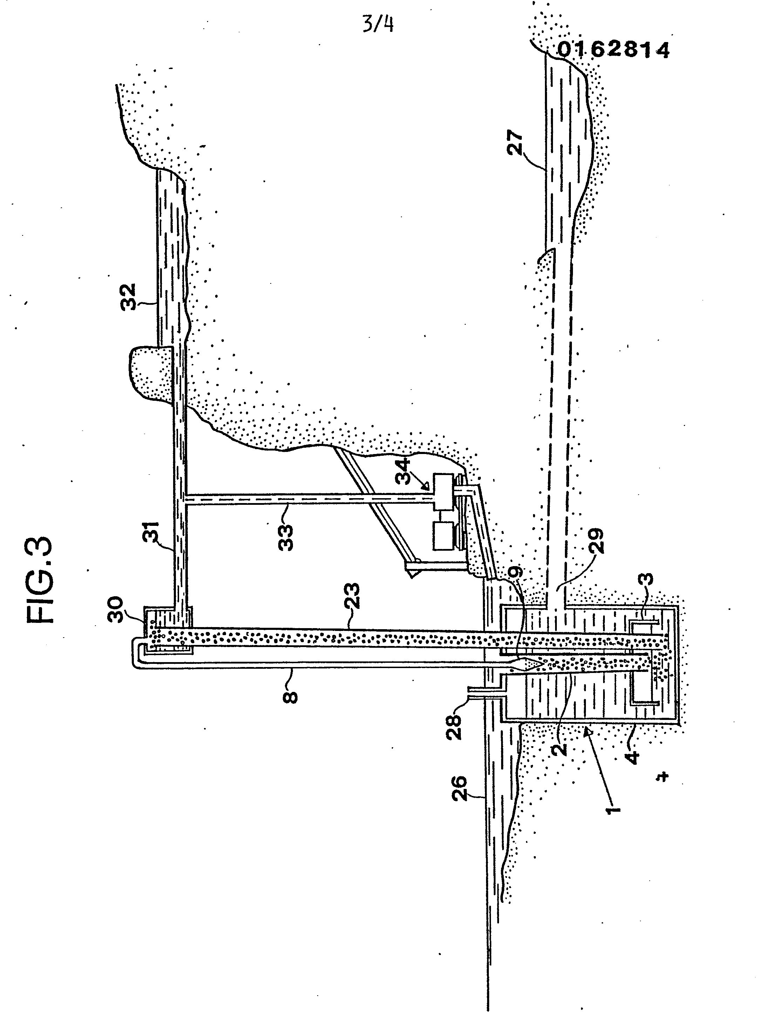

In figure 3, there is shown a plant realized according to the teaching of the present invention for the lifting of water.

As it can be remarked from figure 3, the well 4 of the hydrostatic compressor 1 in the present example is closed at the top, with the exception of the mouth of the tubular body 2, and immersed upstream in the waterstream, indicated in 26, and forming a small head difference with respect to the downstream waterstream, indicated with 27. The upper volume of the well 4 is in communication with the atmosphere through the tube 28 for maintaining the head of water in it at the same level of the water stream downstream 27. The well 4 shows an opening 29 in its lateral wall for allowing the overflow of water that inflows the upstream water stream 26 through the tubular body 2 after the separation of the air entrained with it in the bell 3. The air collects in the pressurized state at a value depending upon the head of the water in the well 4 that resides above the bell 3.

In the well 4, there extends in a position side to side with the tubular body 2 of the hydrostatic compressor 1, the inlet part of a emulsion generating unit 23, of the air-injection pump kind, that draws in the water level at the interior of the bell 3 and is in communication with the volume of compressed air collected in the bell 3, by means of an injector (not shown). An emulsionated mixture of air and small air bubbles is formed, that having a specific gravity lower than that of water, rises in the rising column of the emulsion generating unit 23. The top end of said emulsion unit opens into a separation chamber 30, in which said mixture separates again itself, in air and water. The air collects at the top of the separation chamber 30 for inflowing into a supply conduit 31 of a collection basin 32 located at a suitable piezometric height. Through the descending branching 33, the collected water may be fed to a utilizing machine, generally shown in 34, or it may be gravity - distributed for other uses.

According to the present invention the top air containing volume of the separation chamber 30 is connected with the diffuser 8 that ends at the interior of the inlet aperture of the tubular body 2 of the hydrostatic compressor 1 with the bulb part 9 provided with holes.

As it has been described previously, the Venturi effect produced by water that laps the bulb part 9 of the diffuser 8, induces a depression that sucks air from the diffuser 8 creating in it and the separation chamber 30 an environment of rarefied air. Naturally the head of water in the chamber 30 will be such as to balance the abovementioned depression in order to prevent a re-flow of water from the conduit 31 into the chamber 30.

The thus created depression in the chamber 30 allows therefore that the mixture of water and bubbles of air in the rising column of the emulsion generating unit 23 rises up to an height greater than that which could be reached if the environment in the chamber 30 where at the atmospheric pressure, as it happens in similar conventional plants, with an increase of efficiency for the plant according to the present invention.

From the above disclosure, it results clear that a very important component of the plant according to the present invention is the bulb 9 of the diffuser 8.

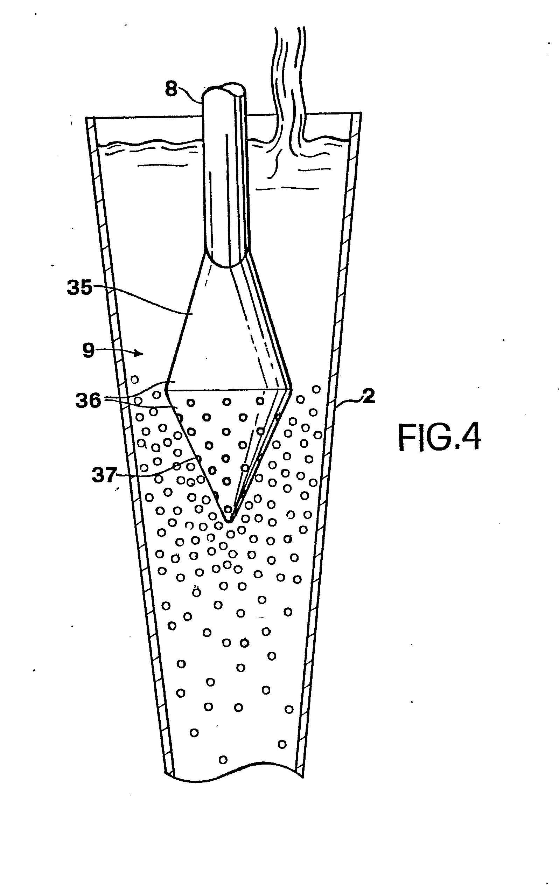

According to the invention it has been found that a particularly convenient shape of said bulb 9 is the one shown in figure 4. In this figure there is shown into detail a section of the descent tube 2 wherein the diffuser 8 ending with a bulb 9 is immersed. The bulb 9 has the shape of a pair of cones being rather elongated, united at their base, the upper cone 35 being connected to the tube of the diffuser 8 and the lower cone 36 being provided with a plurality of calibrated holes 37. This arrangement allows to obtain an effective mixing of the air outgoing from the holes 37 as a consequence of the suction action created by Venturi effect in the throttling between the bulb 9 and the descending tube 2, as a consequence of the flow of water descending along the tube 2.

CLAIMS

1. A plant for the transformation of hydraulic energy in a differential of hydrostatic level of a waterstream into a utilizable form of energy, comprising: a hydrostatic pressure air compressor having an inlet for the air to be compressed up to a first pressure higher than the atmospheric pressure, exploiting the energy of the differential of hydrostatic level, in order to obtain a volume of compressed air; a pneumatic machine having an inlet and an outlet for the air, the inlet being connected with said air volume of the compressor, said machine providing utilizable energy exploiting the expansion of said air from said first pressure up to a second pressure lower than the atmospheric pressure in correspondence with its outlet; and a conduit connecting said outlet of the machine with the air inlet of said compressor, so that said air circulates in a closed loop through said compressor, said machine and said conduit.

2. A plant according to claim 1, wherein the air inlet of said compressor is constituted by a diffuser comprising a tube and a bulb having the shape of two cones united at their base, an upper cone being connected to said tube and a lower cone being provided with a plurality of calibrated holes for the exit of air.

3. A plant according to claim 1, wherein said hydrostatic pressure air compressor comprises: a pneumatic bell located below the lower level of said level differential, the hydrostatic head between said lower le vel and the sheet of water present in said pneumatic bell determining the air pressure within said bell; a descent tube having a decreasing cross section towards the bottom, the bottom outlet end of which is immersed below the sheet of water of said bell, and the top inlet end of which is in water flow communication with the water that is at the upper level of said level differential; an air diffuser located in said top inlet section of the descent tube, said diffuser communicating with the outlet of said pneumatic machine and throttling the flow section of the water entering into said tube, in order to create a Venturi effect for allowing the inlet of air into said tube; and a port in said bell for the outlet of compressed air.

4. A plant according to claim 1, wherein said pneumatic machine is a compressed air turbine, so that said utilizable form of energy is mechanical energy.

5. A plant according to claim 1, wherein said pneumatic machine is a hydraulic lifting unit or emulsion generating unit with air injector comprising a rise tube having a cross section increasing towards the top having the inlet end immersed into water and fed with air injection coming from said air volume in the compressor in order to lift an emulsionated mixture of air and water, a upper chamber wherein the top end of said rise tube opens, in which the emulsion is separated in a volume of air and a volume of water, said volume of air being under a pressure lower than the atmospheric pressure and being in communication with the

- 3 -

0162814

inlet of said compressor, so that said utilizable form of energy consists in a greater differential of hydro static level.

FIG.1

FIG. 2

0162814

FIG.3

0162814

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 100 799 (CARY) <br> * Page 3, line 21 - page 9, line 13 * | 1 | F 03 B 13/00 <br> F 02 C 6/16 |
| A | | 3,4 | |
| Y | AT-A- 364 581 (UHRMANN) <br> * Page 3, lines 14-32 * | 1 | |
| A | GB-A-2 074 249 (IWEKA) <br> * Page 1, lines 1-34 * | 1 | |
| A | US-A-3 939 356 (LOANE) <br> * Column 3, line 28 - column 5, line 25 * | 1,4,5 | |

TECHNICAL FIELDS SEARCHED (Int. Cl.4)

F 03 B
F 02 C

The present search report has been drawn up for all claims

| Place of search <br> THE HAGUE | Date of completion of the search <br> 12-07-1985 | Examiner <br> DE WINTER P.E.F. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82